# DEMANDE DE BREVET EUROPEEN

(11) **EP 3 492 731 A1**
(43) Date de publication de la demande: **05.06.2019**
(21) Numéro de dépôt: 18207287.6
(22) Date de dépôt: 20.11.2018
(51) Int. Cl.: F02M 59/10, F16F 15/26

(54) **MOTEUR À COMBUSTION COMPRENANT UNE POMPE ENTRAÎNÉE PAR UN ARBRE D'ÉQUILIBRAGE**

(30) Priorité: 30.11.2017 FR 1761496
(71) Demandeur: RENAULT s.a.s., 92100 Boulogne-Billancourt (FR)
(72) Inventeur: Millon, Jean-Pierre, 78870 Bailly (FR); GRATIAN, Jean-Louis, 95120 ERMONT (FR)

(57) **Abrégé**

Moteur (2) à combustion comprenant au moins un arbre d'équilibrage (30) et une première pompe (20) apte à compresser un fluide, notamment un carburant, caractérisé en ce que le moteur (2) comprend un premier élément (39) d'entraînement de la première pompe (20) par l'au moins un arbre d'équilibrage (30).

## Description

### Domaine technique de l'invention

La présente invention concerne un moteur à combustion, notamment un moteur diesel, comprenant une pompe et un arbre d'équilibrage. L'invention concerne également un véhicule comprenant un tel moteur à combustion.

### État de la technique

Pour optimiser le fonctionnement des moteurs à combustion, notamment des moteurs diesel, les constructeurs automobiles cherchent à augmenter la pression d'injection du carburant. Une augmentation de pression permet, pour un moteur identique, un gain de puissance. Par conséquent, les constructeurs automobiles ont recourt à l'utilisation d'une pompe permettant de comprimer le carburant à des pressions de plus en plus élevées. Ainsi certaines pompes haute pression sont désormais capables d'élever le carburant à une pression de 2000 bars, voire 2500 bars, voire encore 3000 bars.

De telles pompes requièrent des couples d'entraînement très élevés. La pompe est généralement entraînée par un arbre à cames, lui-même entraîné en rotation par le vilebrequin par l'intermédiaire d'une chaîne de distribution ou par l'intermédiaire de pignons d'entraînement. Les composants transmettant le couple depuis le vilebrequin jusqu'à la pompe doivent donc être suffisamment robustes pour ne pas s'endommager ou se déformer lorsque la pompe est utilisée à pleine puissance.

Cette exigence de robustesse engendre une augmentation de la taille de ces composants. Par conséquent le poids et l'encombrement des moteurs à combustion augmentent.

### Objet de l'invention

Le but de l'invention est de fournir un moteur à combustion remédiant aux inconvénients ci-dessus et améliorant les moteurs à combustion connus de l'art antérieur. En particulier, l'invention permet de réaliser un moteur à combustion qui soit léger, compact et performant.

L'invention se rapporte à un moteur à combustion comprenant au moins un arbre d'équilibrage et une première pompe apte à compresser un fluide, notamment un carburant, et un premier élément d'entraînement de la première pompe par l'au moins un arbre d'équilibrage.

L'au moins un arbre d'équilibrage peut comprendre une came et la première pompe peut comprendre un piston, notamment un piston suiveur de came, la came et le piston étant agencés de sorte qu'une rotation de la came entraîne le déplacement du piston.

Le moteur à combustion peut comprendre un vilebrequin, deux arbres à cames et une rampe d'injection alimentée par la première pompe, la première pompe étant positionnée en référence à un axe vertical, au dessus d'un axe de rotation de l'au moins un arbre d'équilibrage, et/ou au dessus d'un axe de rotation du vilebrequin, et/ou en dessous de la rampe d'injection, et/ou en dessous d'un axe de rotation de chaque arbre à cames.

L'au moins un arbre d'équilibrage peut comprendre un pignon d'entraînement agencé de sorte à être entraîné en rotation par un vilebrequin, et deux extrémités opposées, le pignon d'entraînement étant positionné du côté d'une première extrémité, la première pompe étant positionnée du côté d'une deuxième extrémité.

La première pompe peut comprendre un unique piston.

Le moteur à combustion peut comprendre un carter supportant l'au moins un arbre d'équilibrage, la première pompe comprenant au moins un piston coulissant dans un évidement du carter.

Le moteur à combustion peut comprendre une pompe à eau et/ou une pompe à vide, et un deuxième élément d'entraînement d'une roue de la pompe à eau et/ou de la pompe à vide.

L'au moins un arbre d'équilibrage peut comprendre un premier arbre d'équilibrage et un deuxième arbre d'équilibrage, le premier élément d'entraînement étant un élément d'entraînement de la première pompe par le premier arbre d'équilibrage et le deuxième élément d'entraînement étant un élément d'entraînement de la roue de la pompe à eau par le deuxième arbre d'équilibrage et/ou le premier arbre d'équilibrage comprenant un pignon d'entraînement de la pompe à vide.

La première pompe peut être du type haute pression et peut être apte à compresser un fluide à une pression de 2000 bar, voire 2500 bar, voire encore 3000 bar.

L'invention se rapporte également à un véhicule automobile comprenant un moteur à combustion tel que défini précédemment.

### Description sommaire des dessins

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue schématique d'un véhicule automobile équipé d'un moteur à combustion selon un mode de réalisation de l'invention.
La figure 2 est une vue en perspective du moteur à combustion.
La figure 3 est une vue en perspective de deux arbres d'équilibrage, d'une pompe d'injection et d'une pompe à vide du moteur à combustion.
La figure 4 est une vue schématique en coupe de la pompe d'injection.
La figure 5 est une vue partielle en perspective du moteur à combustion.

### Description d'un mode préférentiel de l'invention

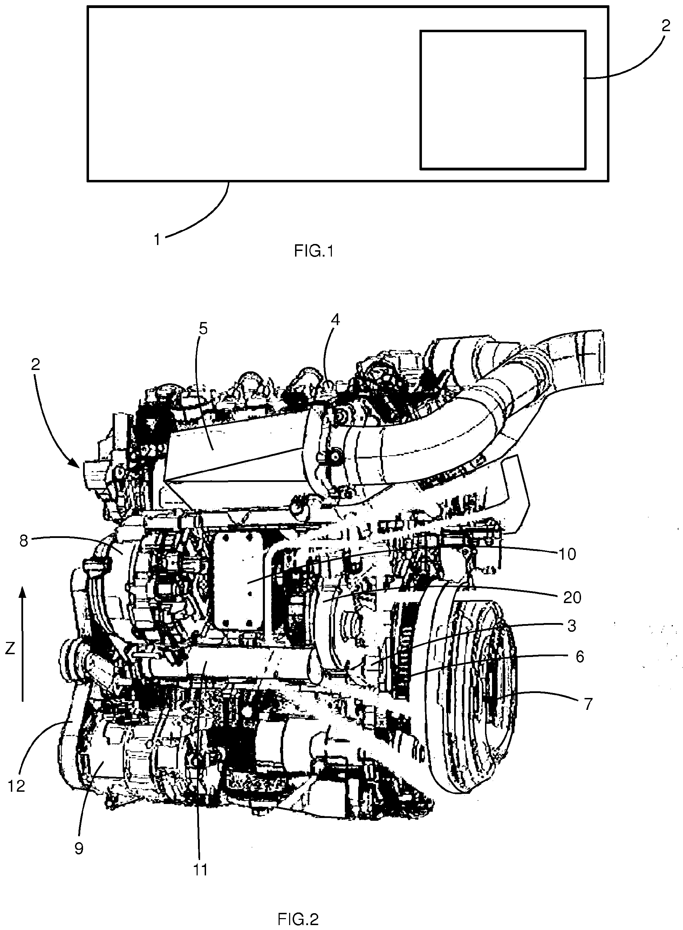

La figure 1 illustre schématiquement un véhicule 1 équipé d'un moteur 2 à combustion. Le véhicule 1 peut être de toute nature comme par exemple un véhicule particulier un véhicule utilitaire, une moto ou un véhicule industriel. Le moteur selon l'invention pourrait également équiper une machine statique, comme par exemple un générateur de courant.

Le moteur 2 requiert pour son fonctionnement l'utilisation d'une première pompe 20. Il s'agit d'une pompe capable de mettre un fluide sous haute pression, notamment une pression de 2000 bars, voire 2500 bars, voire encore 3000 bars. En particulier, et selon un mode de réalisation préférentiel de l'invention, le moteur 2 est un moteur diesel et la première pompe 20 sert à augmenter la pression du gazole avant d'être injecté dans les cylindres du moteur où il sera consumé. Cette première pompe 20, dénommé plus simplement pompe 20 dans la suite de la description, peut également être dénommée « pompe d'injection » ou « pompe haute pression ».

La figure 2 illustre le moteur 2. L'orientation verticale du moteur est illustrée par un axe vertical Z. la forme générale du moteur peut s'apparenter à un parallélépipède comprenant un côté supérieur orienté vers le haut, un côté inférieur orienté vers le bas, un côté gauche et un côté droit orientés respectivement vers la gauche et vers la droite sur la figure 2, un côté avant particulièrement visible sur la figure 2, et un côté arrière non visible sur la figure 2. Le moteur peut être implanté selon n'importe qu'elle orientation dans le compartiment moteur. Ainsi les côtés désignés comme côté droit ou côté gauche en référence à la figure 2 ne sont pas nécessairement positionnés à droite ou à gauche du véhicule. Toutefois, pour simplifier la description, nous utilisons par la suite les termes « gauche » et « droit » en référence à l'orientation du moteur selon la figure 2.

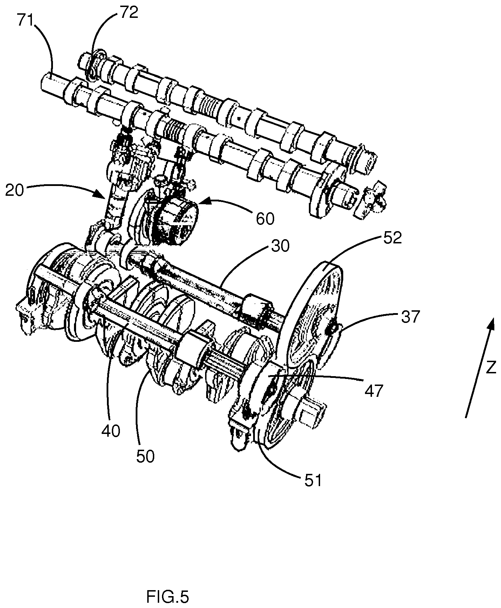

Le moteur comprend un carter 3 comprenant 4 cylindres dans lesquels coulissent des pistons. En variante, le moteur pourrait comprendre tout autre nombre de cylindres. Le carter 3 supporte également un vilebrequin 50 (visible sur la figure 5) relié aux pistons par l'intermédiaire de bielles. La pompe 20 est positionnée sur le côté avant du moteur à environ mi hauteur du moteur suivant l'axe vertical Z et à proximité du côté droit.

On distingue par ailleurs une rampe d'injection 4 haute pression, positionnée sur le côté supérieur. La rampe d'injection 4 est alimentée en carburant par la pompe 20 via une conduite de raccordement. Le moteur 2 comprend notamment un collecteur d'admission d'air 5, un volant moteur 6 entraîné en rotation par le vilebrequin 50, et un mécanisme d'embrayage 7 fixé sur le volant moteur 6. Le volant moteur 6 et l'embrayage 7 sont positionnés sur le côté droit du moteur 2. Une boîte de vitesse (non représentée) peut être fixée contre le moteur 2 du côté de l'embrayage 7. Sur le côté gauche, opposé au côté droit, on peut distinguer une courroie de distribution 12 pour entraîner différents accessoires du moteur, tels que par exemple un alternateur 8 ou un compresseur de climatisation 9. Enfin, le moteur comprend également un échangeur thermique 10 apte à refroidir de l'huile ainsi qu'un circuit d'évitement 11, autrement dit « bypass » de l'échangeur thermique 10. L'échangeur thermique 10 est positionné directement sur le côté gauche de la pompe 20. Le circuit d'évitement 11 est positionné en contrebas de la pompe 20.

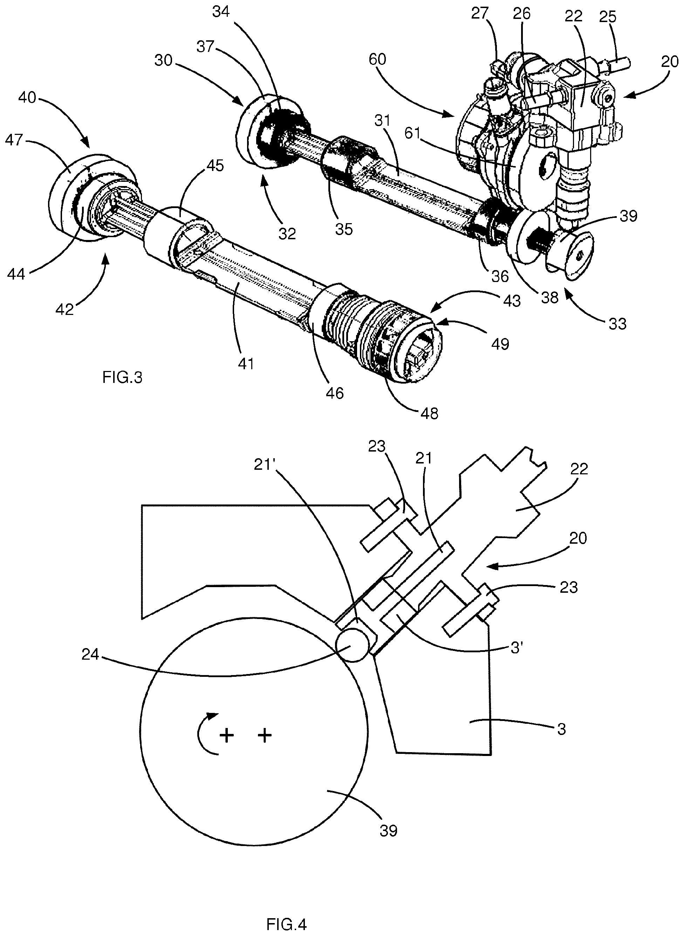

Le moteur 2 comprend également deux arbres d'équilibrages 30, 40 représentés sur la figure 3 et sur la figure 5. En remarque, la figure 5 illustre partiellement le moteur à combustion sous un angle tel que le côté défini plus haut comme le côté « gauche » apparaît à droite, et le côté défini plus haut comme le côté « droit » apparaît à gauche. Les arbres d'équilibrage sont des axes s'étendant parallèlement à l'axe du vilebrequin et comprenant chacun au moins un balourd 31, 41. La rotation des arbres d'équilibrage 30, 40 autour de leurs axes respectifs est destinée à supprimer tout ou partie des vibrations générées par le mouvement d'un attelage mobile comprenant le vilebrequin, et/ou les bielles, et/ou les pistons lors du fonctionnement du moteur. Préférentiellement, pour un moteur comprenant quatre cylindres, les deux arbres d'équilibrage tournent autour de leur axe respectif dans des sens opposés et à une vitesse égale au double de la vitesse de rotation du vilebrequin. Les deux arbres d'équilibrage 30, 40 ou tout au moins leurs balourds 31, 41 respectifs peuvent avoir une forme identique. En variante, le moteur à combustion pourrait comprendre un unique arbre d'équilibrage tournant à une vitesse égale à la vitesse de rotation du vilebrequin, comme cela peut être le cas pour un moteur comprenant trois cylindres.

On s'attache à présent à décrire un premier arbre d'équilibrage 30. Le premier arbre d'équilibrage 30 comprend deux extrémités opposées 32, 33. Une première extrémité 32 est positionnée du côté gauche du moteur, c'est-à-dire du côté du moteur comprenant la courroie de distribution 12. Une deuxième extrémité 33 est positionnée du côté droit du moteur, c'est-à-dire du côté du volant moteur 6. Pour former le balourd 31, le premier arbre d'équilibrage 30 est dissymétrique selon au moins un plan parallèle à son axe de rotation. L'arbre d'équilibrage est supporté par le carter 3 du moteur par l'intermédiaire de trois paliers 34, 35, 36. Ces paliers peuvent être par exemple des paliers à roulements et être répartis le long du premier arbre d'équilibrage. Un premier pignon d'entraînement 37 est fixé à la première extrémité 32 du premier arbre d'équilibrage. Comme cela est particulièrement visible sur la figure 5, le premier pignon d'entraînement 37 est engrené par un pignon 51 fixé au vilebrequin. La pompe 20 est positionnée du côté de la deuxième extrémité 33 du premier arbre d'équilibrage 30.

En complément, un deuxième pignon d'entraînement 38 est fixé sur le premier arbre d'équilibrage 30, entre le balourd 31 et la deuxième extrémité 33. Le deuxième pignon d'entraînement est engrené sur un pignon 61 d'une pompe à vide 60. Le deuxième pignon d'entraînement 38 est donc un élément d'entrainement de la pompe à vide 60. La pompe à vide 60 est apte à créer une dépression dans un mécanisme d'assistance du freinage du véhicule.

A l'instar du premier arbre d'équilibrage 30, le deuxième arbre d'équilibrage est également équipé de trois paliers 44, 45, 46 répartis le long de son axe, et d'un pignon d'entraînement 47 positionné à une première extrémité 42 du deuxième arbre d'équilibrage 40. Le pignon 47 est engrené sur un pignon fou 52, visible sur la figure 5, lui-même engrené sur le pignon 51 fixé au vilebrequin 50. Ainsi, le sens de rotation du deuxième arbre d'équilibrage est bien opposé au sens de rotation du premier arbre d'équilibrage. La rotation des deux arbres d'équilibrage produit ainsi un moment d'inertie de balourd compensant le moment d'inertie de balourd généré par la rotation du vilebrequin et le déplacement des bielles et des pistons. En variante, le pignon fou 52 pourrait tout aussi bien être engrené sur le pignon d'entraînement 37 du premier arbre d'équilibrage 30 plutôt que sur le pignon d'entraînement 47 du deuxième arbre d'équilibrage 40. En remarque, le nombre de dents des pignons d'entraînement 37, 47 et 51 ainsi que du pignon fou 52 sont définis de sorte que les vitesses de rotation des deux arbres d'équilibrage 30, 40 soient égales au double de la vitesse de rotation du vilebrequin.

La première extrémité 42 du deuxième arbre d'équilibrage 40 est positionnée du même côté du moteur que la première extrémité 32 du premier arbre d'équilibrage 30. Une roue 48 de circulation de fluide est fixée à une deuxième extrémité 43 (opposée à la première extrémité 42) au moyen d'une liaison encastrement 49 entre la roue 48 et le deuxième arbre d'équilibrage 40. La roue 48 peut être, par exemple, frettée sur une portion cylindrique de la deuxième extrémité 43 du deuxième arbre d'équilibrage 40. L'axe de rotation de la roue 48 est donc identique à l'axe de rotation du deuxième arbre d'équilibrage 40. La roue 48 permet de mettre en circulation un liquide de refroidissement du moteur. Autrement dit, la roue 48 appartient à une pompe à eau du moteur.

La pompe 20 est entraînée par le premier arbre d'équilibrage 30. Par le terme « entraîner », on comprend que c'est le premier arbre d'équilibrage 30 qui fournit à la pompe 20 l'énergie lui permettant de mettre sous pression le gazole. Le moteur 2 comprend un élément d'entraînement, en l'occurrence une came 39, de la pompe 20 par le premier arbre d'équilibrage 30. Plus précisément, la came 39 est fixée à la deuxième extrémité 33 du premier arbre d'équilibrage 30. La came peut être par exemple une pièce cylindrique fixée de manière excentrée sur le premier arbre d'équilibrage 30. Un rayon de base de la came peut être par exemple de l'ordre de 36 à 60mm et une levée de came par exemple de l'ordre de 1 à 10mm. La came 39 contribue au balourd total du premier arbre d'équilibrage 30. Eventuellement, la came peut être excentrée par rapport à l'axe du premier arbre d'équilibrage dans la même direction que le balourd 31. Ainsi, la came 39 est orientée de sorte que son poids s'additionne au balourd 31. Dans une variante de réalisation le balourd 31 et la came 39 pourrait être un unique composant du premier arbre d'équilibrage 30.

Comme illustré sur la figure 4, la pompe comprend un unique piston 21 apte à se déplacer perpendiculairement à l'axe du premier arbre d'équilibrage 30. La pompe 20 comprend également un corps 22 fixé contre le carter par l'intermédiaire de vis de fixation 23. Enfin, la pompe 20 comprend un rouleau 24 monté libre en rotation à une extrémité du piston 21 et en appui contre la came 39. Le piston 21 est donc un piston suiveur de came. Avantageusement, le rouleau 24 peut être monté dans un logement 21' du piston 21 conçu pour favoriser le glissement du rouleau 24. Le rouleau 24 peut avoir un diamètre d'environ 20mm. Le corps 22 assure le guidage du piston 21 suivant un axe perpendiculaire à l'axe du premier arbre d'équilibrage 30. Le carter 3 comprend un évidement 3' à l'intérieur duquel coulisse le piston 21 pour mettre le gazole sous pression. L'amplitude de déplacement du piston 21 peut être comprise entre 1mm et 10mm. La pompe 20 est donc au moins partiellement intégrée dans le carter 3. Enfin, en référence à la figure 3, la pompe 20 comprend également une entrée basse pression 25, une sortie haute pression 26 et un connecteur électrique 27 destiné à être relié électriquement à une unité de commande électronique du véhicule. L'entrée basse pression 25, la sortie haute pression 26 et le connecteur électrique 27 sont tous trois agencés dans une partie supérieure de la pompe 20.

Selon un mode de réalisation alternatif, la pompe 20 pourrait comprendre d'avantage de pistons et/ou être entraînée différemment par le premier arbre d'équilibrage 30, par exemple par l'intermédiaire d'un engrenage fixé sur le premier arbre d'équilibrage 30. Le (ou les) piston pourrait se déplacer suivant un axe qui n'est pas perpendiculaire à l'axe de rotation du premier axe d'équilibrage 30.

La figure 5 permet de visualiser le positionnement des arbres d'équilibrage 30, 40 et de la pompe 20 à l'intérieur du moteur 2. Le moteur 2 comprend deux arbres à cames 71, 72 s'étendant parallèlement à l'axe du vilebrequin 50. Un premier arbre à came 71 est apte à commander l'ouverture de soupapes d'admission et un deuxième arbre à cames 72 est apte à commander l'ouverture de soupapes d'échappement. Les deux arbres à cames peuvent être entraînés en rotation par le vilebrequin 50, par l'intermédiaire d'un chaîne en prise sur le vilebrequin et sur les deux arbres à cames 71, 72. Préférentiellement, cette chaîne est positionnée du côté gauche du moteur, c'est-à-dire du côté de la courroie de distribution 12. Les deux arbres à cames tournent à une vitesse de rotation égale à la vitesse de rotation du vilebrequin divisée par deux. Les deux arbres à cames sont disposés dans une partie supérieure du moteur 2 au dessus de la pompe 20 et en dessous de la rampe d'injection 4 (cette dernière étant non représentée sur la figure 5). Les deux arbres d'équilibrages sont positionnés à même hauteur l'un de l'autre, entre le vilebrequin 50 et les deux arbres à cames 71, 72 suivant l'axe vertical Z. La pompe 20 est agencée sensiblement verticalement au dessus du premier arbre d'équilibrage 30, c'est-à-dire de sorte que le piston 21 se déplace sensiblement parallèlement à l'axe vertical Z lors de sont fonctionnement. Par ailleurs, la pompe 20 est positionnée en dessous des arbres à cames 71, 72 et en dessous de la rampe d'injection 4 suivant l'axe vertical Z.

Lorsque le moteur fonctionne, le vilebrequin 50 tourne autour de son axe. Le pignon d'entraînement 51 fixé au vilebrequin 50 entraîne le premier arbre d'équilibrage 30 en rotation autour de son axe via le premier pignon d'entraînement 37. Le premier arbre d'équilibrage 30 tourne alors à une vitesse double de la vitesse de rotation du vilebrequin 50 et dans un sens opposé au sens de rotation du vilebrequin. La rotation de la came 39 entraîne le déplacement du piston 21 qui est en appui sur celle-ci. Pour chaque rotation complète du premier arbre d'équilibrage, le piston 21 réalise un mouvement d'aller retour. En variante, la forme de la came 39 pourrait être adaptée de manière à produire deux ou d'avantage de mouvements aller-retour du piston 21 pour une rotation complète du premier arbre d'équilibrage 30. Le rouleau 24 roule au contact de la came 39 ce qui réduit les frictions à l'interface entre la came 39 et la pompe 20. Le gazole est alors mis sous pression par la pompe 20 à une valeur de 2000 bar, voire 2500 bar, voire encore 3000 bar et est conduit dans la rampe d'injection 4. L'effort nécessaire pour actionner la pompe 20 est donc transmis depuis le vilebrequin 50 jusqu'à la pompe 20 via le premier arbre d'équilibrage 30. En particulier, l'effort nécessaire pour actionner la pompe 20 ne passe ni par l'un des arbres à cames 71, 72 ni par une chaîne de distribution. La puissance transmise à la pompe 20 est égale à la vitesse de rotation du premier arbre d'équilibrage 30 multipliée par le couple du premier arbre d'équilibrage sur la pompe. Les deux arbres d'équilibrage 30, 40 tournent à une vitesse égale au quadruple de la vitesse de rotation des deux arbres à cames 71, 72. Le couple supporté par le premier arbre d'équilibrage 30 pour l'entraînement de la pompe est donc nettement plus faible que le couple qui aurait été supporté par l'un des arbres à cames si celui-ci avait été utilisé pour entraîner la pompe 20 à la même puissance. Le balourd 31 du premier arbre d'équilibrage 30 sert d'une part à produire un moment d'inertie apte à atténuer les vibrations du moteur mais confère également au premier arbre d'équilibrage 30 la robustesse nécessaire pour transmettre les efforts d'entraînement entre le vilebrequin 50 et la pompe 20.

Parallèlement à l'entraînement de la pompe 20, le premier arbre à came 30 entraîne également la pompe à vide 60 qui génère alors une dépression dans le mécanisme d'assistance du freinage du véhicule. Le deuxième arbre à came 40 est entraîné en rotation par le vilebrequin via le pignon fou, et entraîne la roue 48 en rotation ce qui entraîne le liquide de refroidissement en circulation pour refroidir le moteur 2.

La pompe 20 est éloignée des soupapes d'échappement et des gaz chauds ressortant du moteur. La sécurité du moteur est ainsi améliorée car en cas de fuite de gazole depuis la pompe 20, le risque d'enflammer le gazole est réduit.

La pompe est idéalement positionnée pour être protégée en cas de collision du véhicule. La boîte de vitesse, fixée à proximité de la pompe, peut faire écran devant la pompe 20 réduisant ainsi le risque d'endommager la pompe 20, ce qui pourrait conduire à une fuite de carburant. De plus, la pompe 20 est idéalement positionnée pour alimenter la rampe d'injection 4, et est facilement accessible pour une éventuelle opération de maintenance. L'encombrement de la pompe 20, et donc du moteur, est faible car la pompe 20 n'utilise qu'un seul piston et est partiellement intégrée dans le carter du moteur. Enfin, le poids du moteur est minimisé car il n'est pas utile d'augmenter la robustesse des arbres à cames ou de leur chaîne d'entraînement.

## Revendications

1. Moteur (2) à combustion comprenant au moins un arbre d'équilibrage (30) et une première pompe (20) apte à compresser un fluide, notamment un carburant, **caractérisé en ce que** le moteur (2) comprend un premier élément (39) d'entraînement de la première pompe (20) par l'au moins un arbre d'équilibrage (30).

2. Moteur (2) à combustion selon la revendication précédente, **caractérisé en ce que** l'au moins un arbre d'équilibrage (30) comprend une came (39) et **en ce que** la première pompe (20) comprend un piston (21), notamment un piston suiveur de came, la came (39) et le piston (21) étant agencés de sorte qu'une rotation de la came (39) entraîne le déplacement du piston (21).

3. Moteur (2) à combustion selon l'une des revendications précédentes, **caractérisé en ce qu'**il comprend un vilebrequin (5), deux arbres à cames (71, 72) et une rampe d'injection (4) alimentée par la première pompe (20), la première pompe (20) étant positionnée en référence à un axe vertical (Z), au dessus d'un axe de rotation de l'au moins un arbre d'équilibrage (30), et/ou au dessus d'un axe de rotation du vilebrequin (50), et/ou en dessous de la rampe d'injection (4), et/ou en dessous d'un axe de rotation de chaque arbre à cames (71, 72).

4. Moteur (2) à combustion selon l'une des revendications précédentes, **caractérisé en ce que** l'au moins un arbre d'équilibrage (30) comprend un pignon d'entraînement (37) agencé de sorte à être entraîné en rotation par un vilebrequin (50), et deux extrémités opposées (32, 33), le pignon d'entraînement (37) étant positionné du côté d'une première extrémité (32), la première pompe (20) étant positionnée du côté d'une deuxième extrémité (33).

5. Moteur (2) à combustion selon l'une des revendications précédentes, **caractérisé en ce que** la première pompe (20) comprend un unique piston (21).

6. Moteur (2) à combustion selon l'une des revendications précédentes, **caractérisé en ce que** le moteur (2) comprend un carter (3) supportant l'au moins un arbre d'équilibrage (30), la première pompe (20) comprenant au moins un piston (21) coulissant dans un évidement (3') du carter (3).

7. Moteur (2) à combustion selon l'une des revendications précédentes, **caractérisé en ce que** le moteur comprend une pompe à eau et/ou une pompe à vide (60), et un deuxième élément (38, 49) d'entraînement d'une roue (48) de la pompe à eau et/ou de la pompe à vide (60).

8. Moteur (2) à combustion selon la revendication précédente, **caractérisé en ce que** l'au moins un arbre d'équilibrage comprend un premier arbre d'équilibrage (30) et un deuxième arbre d'équilibrage (40), le premier élément (39) d'entraînement étant un élément d'entraînement de la première pompe (20) par le premier arbre d'équilibrage (30) et le deuxième élément d'entraînement (49) étant un élément d'entraînement de la roue (48) de la pompe à eau par le deuxième arbre d'équilibrage (40) et/ou le premier arbre d'équilibrage (30) comprenant un pignon d'entraînement (38) de la pompe à vide (60).

9. Moteur (2) à combustion selon l'une des revendications précédentes, **caractérisé en ce que** la première pompe (20) est du type haute pression et est apte à compresser un fluide à une pression de 2000 bar, voire 2500 bar, voire encore 3000 bar.

10. Véhicule (1) automobile comprenant un moteur (2) à combustion selon l'une des revendications précédentes.
